# EUROPEAN PATENT SPECIFICATION

(11) **EP 1 246 724 B1**
(45) Date of publication and mention of the grant of the patent: **08.09.2004**
(21) Application number: 00986161.8
(22) Date of filing: 15.12.2000
(51) Int. Cl.: B32B 31/12, B27G 11/00

(54) **METHOD OF GLUING AND APPARATUS THEREFOR**
VERFAHREN ZUM VERKLEBEN UND VORRICHTUNG DAFÜR
PROCEDE DE COLLAGE ET APPAREIL CORRESPONDANT

(30) Priority: 30.12.1999 EP 99850221
(43) Date of publication of application: 09.10.2002
(73) Proprietor: AKZO NOBEL N.V., 6800 SB Arnhem (NL)
(72) Inventor: NASLI-BAKIR, Benyahia, S-13240 Saltsjö-Boo (SE); RANVIER, Patrick, F-93700 Drancy (FR); OLSSON, Lars, S-13550 Tyresö (SE)
(74) Representative: Jönsson, Christer
(86) International application number: PCT/SE2000/002542
(87) International publication number: WO 2001/049489

(56) References cited:
- EP-A- 0 016 740
- WO-A-85/00318
- FR-A- 2 409 139
- US-A- 5 665 197

## Description

The present invention relates to the manufacture of composite products, wherein a plurality of elements are assembled by gluing them together. In particular it relates to mechanical application of glue in such manufacture.

### Background of the Invention

For the manufacture of products comprising a plurality of elements that are assembled by gluing, sometimes large amounts of glue are applied to large surfaces. In cases where several elements exhibiting such large surfaces are to be assembled one after the other, substantial waiting times may occur before the assembly of elements can be finally processed e.g. in a press, where the curing of the glue takes place. In such instances, for example, in the production of laminated wood, the first element to which glue was applied will have to wait longer than the last element. The amount of glue that is applied to each element is calculated based on the waiting time for the element that has the longest waiting time. This leads to a waste of glue and therefore economic disadvantage.

Commonly used glues are e.g. PRF (Phenol Resorscinol Formaledhyde; two component glue), MUF (Melamine Urea Formaldehyde; two component glue), PUR (Poly urethane; one component glue). In the case of two components, each component can be applied separately or they can be mixed before application.

A method and apparatus of manufacturing composite products as defined in the preamble of the independent claims is generally known in the art.

### Summary of the Invention

Thus, the present invention seeks to provide a method and apparatus that reduces the total amount of glue that is used in the manufacture of composite structures.

The method according to the invention is defined in claim 1.

By controlling the amount of at least one component of a glue applied in relation to the waiting time before a glued object is subjected to final compression treatment in a press, a reduction in glue consumption is achieved.

Preferably the amount of glue is also adapted to other factors such as moisture content in the material to be glued and in the ambient atmosphere, hardness of the material, porosity etc.

A number of different materials can be processed, e.g. metal, polymers, ceramics, wood. In preferred embodiments the material to be processed by the method of the invention is wood.

An apparatus for manufacturing composite products using an optimal amount of glue is defined in claim 14, and an apparatus for the controlled glue application is defined in claim 17.

### Brief Description of the Drawings

Fig. 1 schematically shows a manufacturing station for the production of glued structures;
Fig. 2a shows one type of press;
Fig 2b shows an example of the glue application profile according to the invention for the press of Fig. 2a;
Fig. 3a shows another type of press;
Fig 3b shows an example of the glue application profile according to the invention for the press of Fig. 3a;
Fig. 4a shows a third type of press;
Fig 4b shows an example of the glue application profile according to the invention for the press of Fig. 4a; and
Fig. 5 is a flow chart of an embodiment of the control process.

### Detailed Description of the Invention

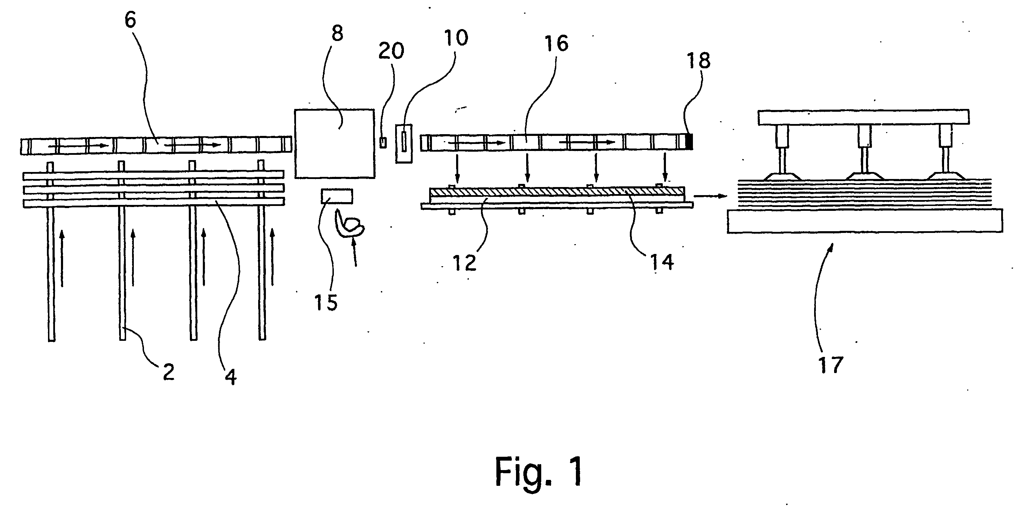

A first embodiment of the invention will now be described with reference to the manufacture of a laminated beam consisting of a stack of individual lamellas glued and pressed together to form the beam, and a schematic illustration of a manufacturing station for this purpose is shown in Fig.1. However, the principle is usable for all kinds of products that are glued together and subjected to pressure for glue hardening purposes.

The manufacturing station comprises a supply unit 2 for individual lamellas 4. The supply unit can be any kind of transport device that is able to position one lamella at a time on a conveyor belt 6 or the like, used for feeding the lamellas into the processing portion of the manufacturing station. The supply unit could even be an operator, manually placing each individual lamella on said conveyor.

The processing portion comprises in the shown embodiment five units: a planer device 8; a glue applicator 10; a stacking unit 12 where a "precursor beam" 14 is assembled; a control unit 15 (e.g. a PC or other micro processor device) and operating panel; and a press 17.

The control unit 15 is supplied with data for the specific product to be manufactured, either by an operator or in digital form from a central computer or by data on diskettes etc. Details of the control program will be given below.

The procedure is thus the following: a first lamella 4 is placed on the conveyor or feeder 6, fed into the planer device 8, where the lamella is suitably surface machined. This unit comprises guide rolls and machining tools, and therefore it can also be used for controlling the speed of the lamella through the station. However, the planer device can be dispensed with if the raw material is of high quality and does not need to be treated, and if the speed of the lamellas can be controlled by the conveyor 6, or by the glue applicator 10.

After having (optionally) been surface machined, the lamella 4 is fed through the glue applicator 10. The glue amount that is applied to the lamella is controlled in a way to be described below, and will vary from lamella to lamella automatically according to the control program, adapted for each individual product type and environmental conditions prevailing in the plant.

After having been provided with the appropriate amount of glue, the lamella 4 on exiting from the glue applicator 10 will be moved forwards by a second conveyor 16 to a stop 18. Then, the lamellas will be moved from the conveyor 16 to the side where they are placed on top of each other until the desired number of lamellas have been assembled to a pile or stack. The assembly is then transported to a press where the pile is subjected to a suitable pressure, and if required to heat, for a sufficient period of time to harden the glue. This part of the process does not form part of the invention per se, and is common knowledge for the skilled man, and will therefore not be described in further detail.

Preferably there will be provided a sensor 20 for counting the number of lamellas passing the glue applicator, or for measuring the number of linear meters that has been fed through the station. The data from the sensor is fed to the control unit 15.

There are several possible types of press usable for the manufacture of laminated products.

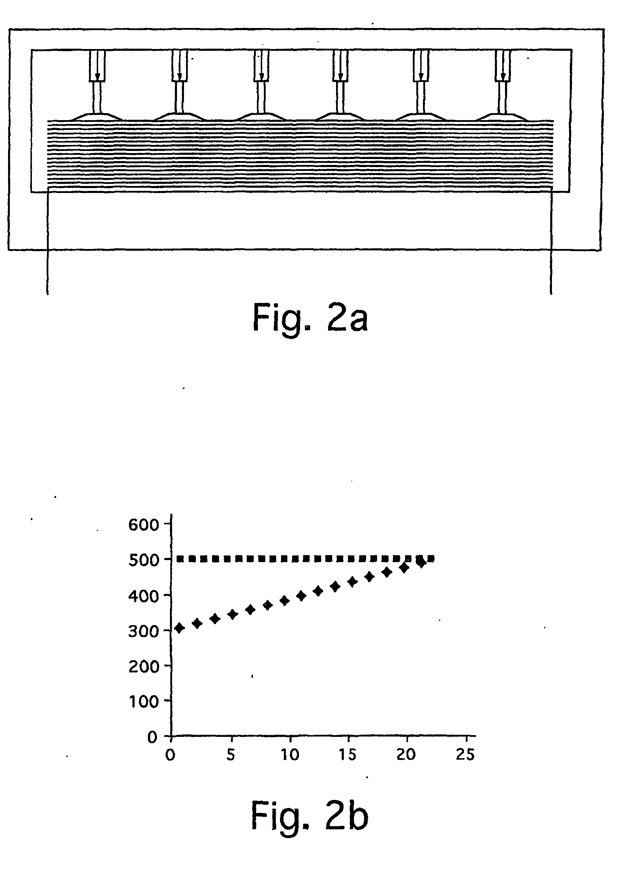

A first example is shown in Fig. 2a. It is a full length press, i.e. it will exert a pressure over the entire assembly of glued lamellas at one and the same time, and thus all parts will be pressed simultaneously, therefore the pressing operation itself will not cause any additional waiting times that must be considered in the glue application.

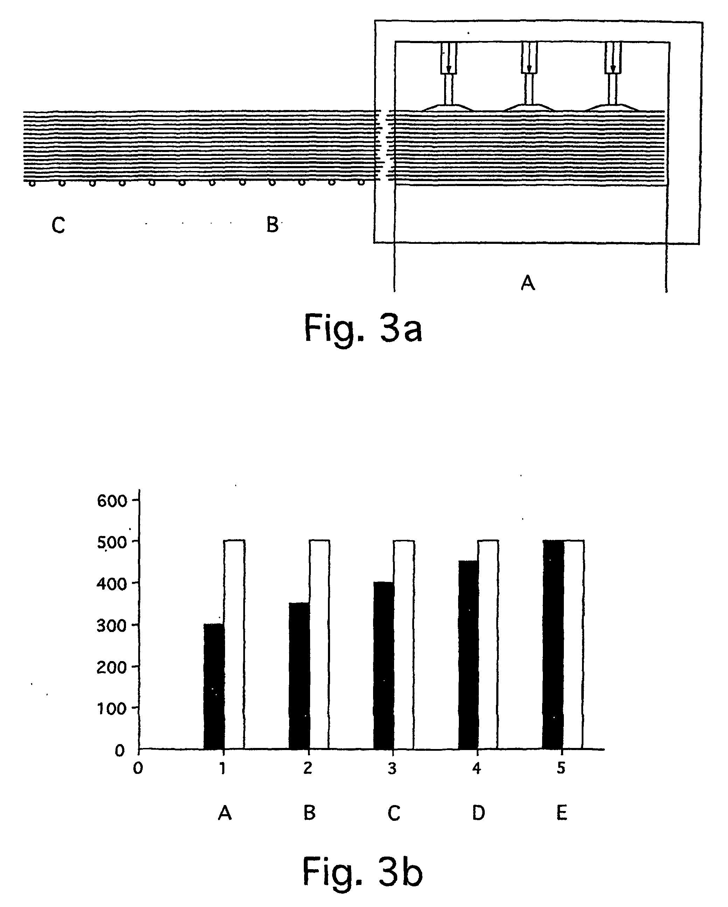

In contrast, the press shown in Fig. 3a, which is a section press, will press only part of the assembly in a first pressing operation, and then continue along the length of the assembly in several operations, that may or may not be overlapping. In this case obviously the last section to be pressed has to wait additional time, and thus the amount of glue is optimized also in accordance therewith.

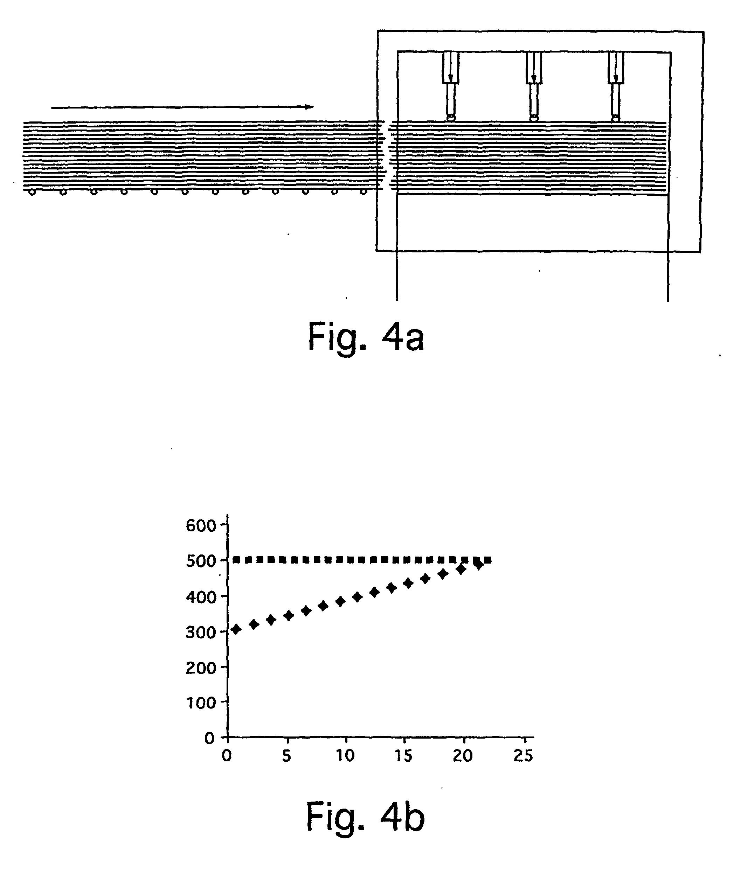

A third alternative is shown in Fig. 4a, which shows a continuously working press, i.e. the pressure is applied by means of rollers acting on the upper surface of the pile or stack of lamellas. The assembly is then fed continuously through the press.

Obviously the glue application profiles for these alternatives differ, and the profile for each respective type of press is shown in Figs. 2b-4b.

In the case of a full length press, as already mentioned, there is no waiting time caused by the pressing operation as such, and the only waiting times to consider are the waiting times for each lamella during the gluing and stacking process. Thus, as shown in Fig. 2b there is a constant amount of glue applied over the entire surface or length of each lamella, but the amount of glue will differ between lamellas. ◆ designates the glue applied in accordance with the invention, and ■ the traditional spread of glue.

In the second case, with sections pressed one at a time, there will obviously occur a waiting time between each consecutive pressing operation, and consequently the glue must be applied differently over the length of the lamellas. The glue amounts increase in increments over the length, and the glue application profile is shown by the left hand bars in the bar chart in Fig. 3b (the bars of equal length represent traditional glue spread). Thus, the section subjected to the compression first (section A in Fig. 3b) will have a smaller amount of glue applied than the following sections, since the waiting time is highest for the higher "numbered" sections.

In the continuous glue application case, there will of course be a continuously increasing amount of glue needed to be applied as a function of increasing waiting time, as clearly seen in Fig. 4b, wherein ◆ designates the amount of glue as a function of linear meters of product, according to the invention, and ■ designates traditional glue application.

Of course the optimal application of glue would be a combination of a varying application on one hand between lamellas, but also over the length of a lamella.

The amount of glue to be applied to each element can be controlled in several ways.

It is possible to have the control unit control at least four different parts of the system shown in Fig. 1, namely a) the conveyor 6; b) the planer device 8; c) the glue applicator 10; and d) the second conveyor 16.

Thus, obviously the amount of glue that is applied to an element passing through the glue applicator 10, will change if the speed through the applicator changes; rapid movement will yield a thinner glue layer, and a slow movement a thick layer. As can be easily understood, by running at a constant speed and then simply reducing the speed abruptly at half length of an element, two distinct areas having different amounts of glue applied are achieved.

On the other hand it is equally easy to increase or decrease the speed continuously, thereby obtaining a linear "gradient" of glue over the length of an element.

For the simple case where there is only a need to change the amount between elements, the speed is kept constant over the entire length of each lamella. This would correspond to the situation in Fig. 2a where a full length press is used, and the bottom lamella is the first to which glue was applied, thus having the longest waiting time.

If the planer device 8 is used, as already indicated its guide rolls and/or machining tools can be used to force the lamellas 4 through the system, and thus the speed control can be obtained by controlling the planer device 8.

It is possible to use the second conveyor 16 too for speed control, although this would require slightly more complicated means. E.g. a connection to the conveyor would have to be provided such that the conveyor pulls the lamella through the applicator 8, thereby acting as a feeder device.

Of course the glue applicator itself can be used to control the amount of glue applied. Several possibilities exist. In the first place it is dependent on the type of applicator. An applicator normally is of either of a string type or of a curtain type. As indicated by these designations, the first applies only an essentially linear string of glue, preferably to narrow objects. A curtain applicator spreads the glue over a wide area, up to as much as several meters in width.

One way of controlling the amount of glue applied at a constant speed of the elements, is of course to control the pumped flow of the glue.

Another way is to change the "working" width of the ribbon spreader pipe, for a string type applicator simply by reducing or increasing the number of nozzles which are open, by turning the spreader pipe. For a curtain type of applicator the slit width can be varied.

Combinations of speed of element movement and of applicator settings are of course also conceivable.

In the case where a two-component adhesive is employed, it is possible to control the mixing ratio of hardener to glue. The more hardener the faster the hardening and the less the allowed waiting time. Thus, the first element of a series of elements to be assembled should be provided with adhesive, the ratio between hardener and glue of which should be lower than the ratio for the last element.

### EXAMPLES:

In the following examples a glue of the PRF type has been used.

### Example 1

A construction beam made up of 21 pieces is manufactured by assembling lamellas and pressing in a full length press. The piece to which the glue is applied first has a waiting time of 1 hour, and the last piece has a waiting time of 10 minutes. The following glue application profile will be employed.

| Lamella No. | Amount of glue (g/m²) |
|---|---|
| 1 | 500 |
| 2 | 488 |
| 3 | 476 |
| 4 | 464 |
| 5 | 452 |
| .. | |
| .. | |
| 21 | 300 |

The profile is illustrated graphically in Fig. 2b for above assembly of 21 pieces.

The amount of glue per m² can of course vary, and commonly does so between 100-300 g/m² for 10 minutes waiting time, and between 300-500 g/m² for 1 hour waiting time. As already indicated above moisture content in the material, humidity in the atmosphere, ambient temperature, will also influence the amount glue to be applied.

### Example 2

A construction beam made up of 21 sections as in Example 1 is made, but instead of a full length press a section press is used (Fig. 3a). Thus, it becomes preferred to apply different amounts of glue on the various sections of each piece, in addition to varying the amount from one lamella to another, see Fig. 3b, wherein the black bars represent the glue application according to the invention, and the white bars represent traditional application. In the example the beam is pressed in 5 sections (A-E, where A is the section that will enter the press first).

| Lamella No. | Amount of glue (g/m²) on each section | | | | |
|---|---|---|---|---|---|
| | A | B | C | D | E |
| 1 | 342 | 392 | 442 | 492 | 542 |
| 2 | 340 | 390 | 440 | 490 | 540 |
| 3 | 338 | 388 | 438 | 488 | 538 |
| 4 | 336 | 386 | 436 | 486 | 536 |
| 5 | 334 | 384 | 434 | 484 | 534 |
| | .. | | | | |
| | .. | | | | |
| 21 | 300 | 350 | 400 | 450 | 500 |

In the pile of lamellas, lamella no. 21 will be the top lamella, thus having the shortest waiting time.

### Example 3

A construction beam made up of 21 lamellas as in Example 1 is made, but instead of a full length press a continuously operating press is used. Thus, it becomes preferred to apply a gradient of the amounts of glue over the length of each piece. Strictly speaking it is not necessary to apply a continuously changing amount, it would suffice to increment the amount as if the press is operated as a section press with a very large number of sections. In this context "very large" could mean 20 sections or more.

The profile in Fig. 4b adequately illustrates the required profile for one of the lamellas in a beam.

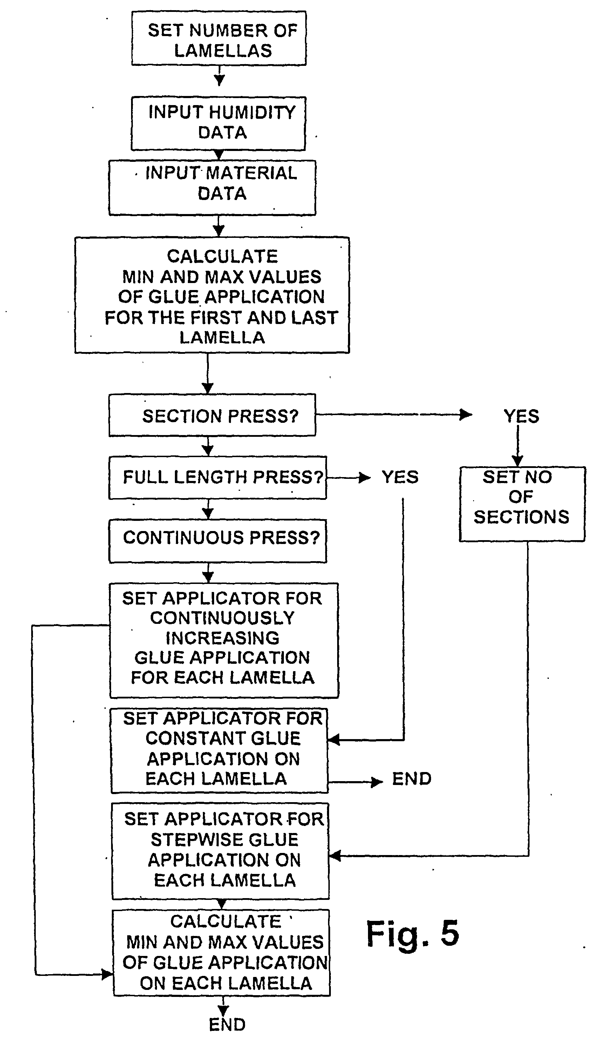

Fig. 5 is a flow chart that illustrates one embodiment of the control program for controlling the glue application in accordance with the inventive concept.

It assumes that a one-component glue is used, and that the process is for the manufacture of a beam comprising a number of lamellas to be assembled.

Thus, the first step is to set the number of lamellas to be assembled, and data relating to environment (e.g. humidity as in the example, although other factors might be considered too), and to material properties, e.g. hardness, porosity etc. From this input data and data from a data base containing information about glue behaviour under different circumstances, the necessary minimum and maximum glue amounts are calculated for each lamella.

Next, the type of press is selected, and in case of a section press, the number of sections is set. Also in response to the press selection, the glue applicator is set for constant application or stepwise or continuous change of glue application.

The invention has been describe with reference to some embodiments, but the skilled man will find various modifications without departing from the scope of invention as defined in the claims.

## Claims

1. A method of manufacturing laminated beams, wherein a plurality of lamellas are assembled by gluing them together under pressure, comprising the steps of:
providing a number of lamellas to be assembled;
applying glue to at least one surface of each lamella;
assembling the lamellas to the desired structure; and
subjecting the assembled lamellas to pressure in a press;
**characterized by**
controlling the amount of at least one component of the glue, applied at a specific point of glue application on a lamella, to be a function of the waiting time it takes before the point of glue application is subjected to the pressure in the press.

2. The method according to claim 1, wherein the glue is a multi-component adhesive, one component of which is a hardener and wherein the amount of one of said adhesive components is controlled so as to control the ratio between hardener and remaining components to be a function of the waiting time.

3. The method according to claim 2, wherein the glue is a two-component adhesive comprising hardener and a glue, the ratio hardener:glue is controlled to be lower for longer waiting times.

4. The method according to claim 1, wherein the glue is a one-component glue, and the amount of glue applied is increased as a function of increased waiting time.

5. The method according to claim 4 wherein the amount of glue applied to each lamella is constant over the surface of said element, but varies between lamellas.

6. The method according to claim 4, wherein the first element in a series of lamellas receives a smaller amount of glue than subsequent elements.

7. The method according to claim 4, wherein the amount of glue applied to each lamellas varies over the surface of said lamella.

8. The method according to any of claims 4-7 wherein the amount of glue applied is controlled by controlling the speed of movement of the element(s) during glue application

9. The method according to claim 8, wherein the amount of glue applied is controlled by controlling the rate of application of glue onto the surface of each lamella.

10. The method according to claim 8 or 9, wherein the speed of movement is varied from one lamella to another.

11. The method according to claim 8 or 9, wherein the speed of movement is varied during the glue application on each lamella.

12. The method according to claim 11, wherein the speed of movement is varied stepwise or continuously.

13. The method according to claim 9, wherein the application rate is varied stepwise or continuously.

14. A glue applicator for the optimal application of glue in the manufacture of laminated beams, wherein a plurality of lamellas are assembled by gluing them together under pressure in a press,
**characterized in that**
the glue applicator is run under control of a control unit (15) in order to provide an optimal applied glue amount, said control unit being programmed to run a control sequence, comprising:
controlling the amount of at least one component of the glue, applied at a specific point of glue application on a lamella, to be a function of the waiting time it takes before the point of glue application is subjected to the pressure in the press.

15. The glue applicator as claimed in claim 14, wherein the control sequence is adapted to control the speed of movement of the feeder (6; 16), and thereby of the lamellas through the glue applicator (10).

16. The glue applicator as claimed in claim 14, wherein the control sequence is adapted to control the rate of glue application to the lamellas.

17. The glue applicator as claimed in any of claims 14-16, wherein the control unit is a personal computer or other microprocessor.

18. An apparatus for the manufacturing of composite products, wherein a plurality of lamellas are assembled by gluing them together under pressure, comprising
a lamella feeder (6; 16);
a stacking unit (12);
a control unit (15); and
a press (17);
**characterized by**
a glue applicator (10) as claimed in claim 14.

19. The apparatus as claimed in claim 18, wherein the control sequence is adapted to control the speed of movement of the feeder (6; 16), and thereby of the lamellas through the glue applicator (10).

20. The apparatus as claimed in claim 18, wherein the control sequence is adapted to control the rate of glue application to the lamellas.

21. The apparatus as claimed in any of claims 18-20, wherein the control unit is a personal computer or other microprocessor.

22. The apparatus as claimed in any of claims 18-21, for the manufacture of laminated wooden beams from individual lamellas.

23. The apparatus as claimed in any of claims 18-22, comprising a sensor (20) for counting the number of lamellas (4) passing the glue applicator (10), or for measuring the number of linear meters that has passed through the station.

24. The apparatus as claimed in any of claims 18-23, wherein the press (17) is a section press, which is adapted to press only part of the assembly in a first pressing operation, and than continue along the length of the assembly in several operations, the control sequence in the control unit being adapted to consider the varying waiting times.

## Patentansprüche

1. Verfahren zur Herstellung von Schichtbalken, wobei mehrere Schichten verbunden werden, indem sie unter Druck zusammen geklebt werden, das die folgenden Schritte aufweist:
Bereitstellen einer Anzahl von zu verbindenden Schichten;
Auftragen von Klebstoff auf mindestens eine Oberfläche jeder Schicht;
Verbinden der Schichten zu der gewünschten Struktur; und
Aufbringen von Druck auf die verbundenen Schichten in einer Presse;
**gekennzeichnet durch**
Steuern der Menge von mindestens einer Komponente des Klebstoffs, die an einem bestimmten Klebstoffauftragungspunkt auf einer Schicht aufgetragen wird, als eine Funktion der Wartezeit, die es dauert, bevor der Klebstoffauftragungspunkt dem Druck in der Presse ausgesetzt wird.

2. Verfahren nach Anspruch 1, wobei der Klebstoff ein Mehrkomponenten-Klebstoff ist, wobei eine Komponente davon ein Härtungsmittel ist und wobei die Menge einer der Klebstoffkomponenten gesteuert wird, um das Verhältnis zwischen dem Härtungsmittel und den restlichen Komponenten als eine Funktion der Wartezeit zu steuern.

3. Verfahren nach Anspruch 2, wobei der Klebstoff ein Zwei-Komponenten-Klebstoff ist, der Härtungsmittel und Klebstoff aufweist, wobei das Verhältnis Härtungsmittel :
Klebstoff so gesteuert wird, daß es für längere Wartezeiten niedriger wird.

4. Verfahren nach Anspruch 1, wobei der Klebstoff ein Ein-Komponenten-Klebstoff ist und die Menge an aufgetragenem Klebstoff als eine Funktion zunehmender Wartezeit vergrößert wird.

5. Verfahren nach Anspruch 4, wobei die Menge an Klebstoff, die auf jede Schicht aufgetragen wird, über die Oberfläche des Elements konstant ist, sich aber zwischen Schichten ändert.

6. Verfahren nach Anspruch 4, wobei' das erste Element in einer Reihe von Schichten eine kleinere Klebstoffmenge bekommt als darauf folgende Elemente.

7. Verfahren nach Anspruch 4, wobei die Menge an Klebstoff, die auf jede Schicht aufgetragen wird, sich über die Oberfläche der Schicht ändert.

8. Verfahren nach einem der Ansprüche 4 bis 7, wobei die Menge an aufgetragenem Klebstoff gesteuert wird, indem die Bewegungsgeschwindigkeit des/der Elements/e während des Klebstoffauftrags gesteuert wird.

9. Verfahren nach Anspruch 8, wobei die Menge an aufgetragenem Klebstoff gesteuert wird, indem die Geschwindigkeit des Klebstoffauftrags auf die Oberfläche jeder Schicht gesteuert wird.

10. Verfahren nach Anspruch 8 oder 9, wobei die Bewegungsgeschwindigkeit von einer Schicht zur nächsten verändert wird.

11. Verfahren nach Anspruch 8 oder 9, wobei die Bewegungsgeschwindigkeit während des Klebstoffauftrags auf jede Schicht verändert wird.

12. Verfahren nach Anspruch 11, wobei die Bewegungsgeschwindigkeit stufenweise oder kontinuierlich verändert wird.

13. Verfahren nach Anspruch 9, wobei die Auftragungsgeschwindigkeit stufenweise oder kontinuierlich verändert wird.

14. Klebstoffauftragungsvorrichtung für das optimale Auftragen von Klebstoff bei der Herstellung von Schichtbalken, wobei mehrere Schichten verbunden werden, indem sie unter Druck in einer Presse miteinander verklebt werden,
**gekennzeichnet dadurch, daß**
die Klebstoffauftragungsvorrichtung unter der Steuerung einer Steuerungseinheit (15) betrieben wird, um eine optimale aufgetragene Klebstoffmenge bereitzustellen, wobei die Steuerungseinheit programmiert ist, eine Steuerungssequenz zu durchlaufen, die aufweist:
Steuern der Menge von mindestens einer Komponente des Klebstoffs, die an einem bestimmten Klebstoffauftragungspunkt auf einer Schicht aufgetragen wird, als eine Funktion der Wartezeit, die es dauert, bevor der Klebstoffauftragungspunkt dem Druck in der Presse ausgesetzt wird.

15. Klebstoffauftragungsvorrichtung nach Anspruch 14, wobei die Steuerungssequenz geeignet ist, die Bewegungsgeschwindigkeit der Zuführungsvorrichtung (6; 16) und dadurch der Schichten durch die Klebstoffauftragungsvorrichtung (10) zu steuern.

16. Klebstoffauftragungsvorrichtung nach Anspruch 14, wobei die Steuerungssequenz geeignet ist, die Geschwindigkeit des Klebstoffauftrags auf die Schichten zu steuern.

17. Klebstoffauftragungsvorrichtung nach einem der Ansprüche 14 bis 16, wobei die Steuerungseinheit ein Personal Computer oder ein anderer Mikroprozessor ist.

18. Vorrichtung zm Herstellen von Verbundprodukten, wobei mehrere Schichten verbunden werden, indem sie unter Druck miteinander verklebt werden, die aufweist:
eine Schichtenzuführungsvorrichtung (6; 16);
eine Stapeleinheit (12);
eine Steuerungseinheit (15); und
eine Presse (17);
**gekennzeichnet durch**
eine Klebstoffauftragungsvorrichtung (10) nach Anspruch 14.

19. Vorrichtung nach Anspruch 18, wobei die Steuerungssequenz geeignet ist, die Geschwindigkeit der Zuführungsvorrichtung (6; 16) und dadurch der Schichten durch die Klebstoffauftragungsvorrichtung (10) zu steuern.

20. Vorrichtung nach Anspruch 18, wobei die Steuerungssequenz geeignet ist, die Geschwindigkeit des Klebstoffauftrags auf die Schichten zu steuern.

21. Vorrichtung nach einem der Ansprüche 18 bis 20, wobei die Steuerungseinheit ein Personal Computer oder ein anderer Mikroprozessor ist.

22. Vorrichtung nach einem der Ansprüche 18 bis 21 für die Herstellung von Schichtholzbalken aus einzelnen Schichten.

23. Vorrichtung nach einem der Ansprüche 18 bis 22 mit einem Sensor (20) zum Zählen der Anzahl von Schichten (4), welche die Klebstoffauftragungsvorrichtung (10) durchlaufen, oder zum Messen der Anzahl von linearen Metern, welche die Station durchlaufen haben.

24. Vorrichtung nach einem der Ansprüche 18 bis 23, wobei die Presse (17) eine Abschnittspresse ist, die geeignet ist, in einem ersten Preßarbeitsgang nur einen Teil der Anordnung zu pressen und dann entlang der Länge der Anordnung in mehreren Arbeitsgängen weiterzumachen, wobei die Steuerungssequenz in der Steuerungseinheit geeignet ist, die verschiedenen Wartezeiten zu berücksichtigen.

## Revendications

1. Procédé de fabrication de poutres lamellées, dans lequel on assemble une pluralité de lamelles en les collant ensemble sous pression, comprenant les étapes consistant à :
prendre un certain nombre de lamelles à assembler ;
appliquer de la colle sur au moins une surface de chaque lamelle ;
assembler les lamelles en formant la structure souhaitée ; et
soumettre les lamelles assemblées à une pression dans une presse ;
**caractérisé par** le fait de régler la quantité d'au moins un composant de la colle, appliquée en un point spécifique d'application de colle sur une lamelle, de manière à ce qu'elle soit fonction du temps d'attente nécessaire avant que le point d'application de colle ne soit soumis à la pression dans la presse.

2. Procédé selon la revendication 1, dans lequel la colle est un adhésif à plusieurs composants, l'un de ces composants étant un durcisseur, et dans lequel la quantité de l'un desdits composants de l'adhésif est réglée de façon à régler le rapport entre le durcisseur et les composants restants de manière à ce qu'il soit fonction du temps d'attente.

3. Procédé selon la revendication 2, dans lequel la colle est un adhésif à deux composants comprenant un durcisseur et une colle, le rapport durcisseur/colle étant réglé de manière à être plus faible pour les temps d'attente longs.

4. Procédé selon la revendication 1, dans lequel la colle est une colle à un composant, et dans lequel on augmente la quantité de colle appliquée lorsque le temps d'attente augmente.

5. Procédé selon la revendication 4, dans lequel la quantité de colle appliquée à chaque lamelle est constante sur la surface dudit élément, mais varie entre les lamelles.

6. Procédé selon la revendication 4, dans lequel le premier élément d'une série de lamelles reçoit une plus petite quantité de colle que les éléments suivants.

7. Procédé selon la revendication 4, dans lequel la quantité de colle appliquée à chaque lamelle varie sur la surface de ladite lamelle.

8. Procédé selon l'une quelconque des revendications 4 à 7, dans lequel la quantité de colle appliquée est réglée en réglant la vitesse de déplacement du ou des élément(s) pendant l'application de colle.

9. Procédé selon la revendication 8, dans lequel la quantité de colle appliquée est réglée en réglant la vitesse d'application de la colle sur la surface de chaque lamelle.

10. Procédé selon la revendication 8 ou 9, dans lequel on fait varier la vitesse de déplacement d'une lamelle à l'autre.

11. Procédé selon la revendication 8 ou 9, dans lequel on fait varier la vitesse de déplacement au cours de l'application de la colle sur chaque lamelle.

12. Procédé selon la revendication 11, dans lequel on fait varier la vitesse de déplacement pas à pas ou en continu.

13. Procédé selon la revendication 9, dans lequel on fait varier la vitesse d'application pas à pas ou en continu.

14. Applicateur de colle pour l'application optimale de colle dans la fabrication de poutres lamellées, où une pluralité de lamelles sont assemblées en les collant ensemble sous pression dans une presse, **caractérisé en ce que** l'on fait fonctionner l'applicateur de colle sous le contrôle d'une unité de commande (15) afin d'obtenir une quantité optimale de colle appliquée, ladite unité de commande étant programmée pour exécuter une séquence de commande, comprenant le fait de régler la quantité d'au moins un composant de la colle, appliquée en un point spécifique d'application de colle sur une lamelle, de manière à ce qu'elle soit fonction du temps d'attente nécessaire avant que le point d'application de colle ne soit soumis à la pression dans la presse.

15. Applicateur de colle selon la revendication 14, dans lequel la séquence de commande est adaptée pour régler la vitesse de déplacement du dispositif d'alimentation (6 ; 16), et de ce fait la vitesse de déplacement des lamelles à travers l'applicateur (10) de colle.

16. Applicateur de colle selon la revendication 14, dans lequel la séquence de commande est adaptée pour régler la vitesse d'application de la colle sur les lamelles.

17. Applicateur de colle selon l'une quelconque des revendications 14 à 16, dans lequel l'unité de commande est un ordinateur personnel ou autre microprocesseur.

18. Appareil pour la fabrication de produits composites, dans lequel une pluralité de lamelles sont assemblées en les collant ensemble sous pression, comprenant :
un dispositif d'alimentation (6 ; 16) de lamelles ;
une unité d'empilage (12) ;
une unité de commande (15) ; et
une presse (17) ;
**caractérisé en ce qu'**il comprend en outre un applicateur de colle (10) conforme à la revendication 14.

19. Appareil selon la revendication 18, dans lequel la séquence de commande est adaptée pour régler la vitesse de déplacement du dispositif d'alimentation (6 ; 16), et de ce fait la vitesse de déplacement des lamelles à travers l'applicateur (10) de colle.

20. Appareil selon la revendication 18, dans lequel la séquence de commande est adaptée pour régler la vitesse d'application de la colle sur les lamelles.

21. Appareil selon l'une quelconque des revendications 18 à 20, dans lequel l'unité de commande est un ordinateur personnel ou autre microprocesseur.

22. Appareil selon l'une quelconque des revendications 18 à 21, pour la fabrication de poutres lamellées en bois à partir de lamelles individuelles.

23. Appareil selon l'une quelconque des revendications 18 à 22, comprenant un capteur (20) pour compter le nombre de lamelles (4) passant dans l'applicateur (10) de colle, ou pour mesurer le nombre de mètres linéaires qui sont passés dans la station.

24. Appareil selon l'une quelconque des revendications 18 à 23, dans lequel la presse (17) est une presse à sections, qui est adaptée pour presser seulement une partie de l'assemblage dans une première opération de pressage, puis pour continuer sur toute la longueur de l'assemblage en plusieurs opérations, la séquence de commande de l'unité de commande étant adaptée pour prendre en compte les divers temps d'attente.
